# EUROPEAN PATENT APPLICATION

(11) **EP 4 683 080 A1**
(43) Date of publication of application: **21.01.2026**
(21) Application number: 24216402.8
(22) Date of filing: 29.11.2024
(51) Int. Cl.: H01M 50/342, H01M 50/278, H01M 50/367, H01M 50/30

(54) **BATTERY PACK CASING**

(30) Priority: 19.07.2024 CN 202421724738 U; 19.08.2024 WO PCT/CN2024/113114
(71) Applicant: Eve Energy Co., Ltd., Huizhou, Guangdong 516006 (CN)
(72) Inventor: NIU, Jiaxin, Huizhou, Guangdong, 516006 (CN); LING, Xinchen, Huizhou, Guangdong, 516006 (CN)
(74) Representative: Berggren Oy

(57) **Abstract**

A battery pack casing is provided. The battery pack casing includes a cap (10) provided with a pressure relief hole (13), and an explosion-proof valve assembly (20) disposed on the cap (10). The explosion-proof valve assembly (20) includes a valve body (21) and a diaphragm (22) connected to each other. The valve body (21) is connected to the cap (10). The diaphragm (22) plugs the pressure relief hole (13). The valve body (21) is laser welded to the cap (10).

## Description

### TECHNICAL FILED

The present disclosure relates to the technical field of batteries, in particular to a battery pack casing.

### BACKGROUND

Safety is one of the technical indicators of batteries. In order to ensure the safety of the power battery, an explosion-proof valve may be provided on the battery to release gas pressure inside the battery. The specific implementation may be as follows: the explosion-proof valve is provided on a cap or a casing. In condition that the air pressure value inside the battery exceeds the safe value, the gas inside the battery will break through the explosion-proof sheet of the explosion-proof valve and release the air pressure inside the battery in time, thereby avoiding the excessive air pressure value inside the battery. The explosion-proof valves may be used in the automotive field, especially in power batteries. A battery pack may be provided with one or more explosion-proof valves to ensure the pressure relief and air pressure balance of the battery pack.

### SUMMARY

Based on the concept of automobile lightweight, more and more battery packs are designed with plastic casings. A valve body of the explosion-proof valve may be made of polycarbonate (PC) or polyadiohexylenediamine (nylon-66, PA66) as a main material, and then integrated into the battery pack through bolts, buckles, and sealing rings. The valve body may also be injection molded onto the plastic cap, but the above two solutions are difficult to ensure the flatness of the explosion-proof sheet during welding, and the overall product development progress may be reduced.

Therefore, it is needed to design a battery pack casing to solve technical hazards.

The embodiments of the present disclosure provide a battery pack casing. The battery pack casing includes a cap provided with a pressure relief hole, and an explosion-proof valve assembly disposed on the cap. The explosion-proof valve assembly includes a valve body and a diaphragm connected to each other. The valve body is connected to the cap. The diaphragm plugs the pressure relief hole. The valve body is laser welded to the cap.

In the battery pack casing provided by the present disclosure, the pressure relief hole penetrating the cap is arranged on the cap, and the diaphragm is correspondingly arranged with the pressure relief hole, so that in condition that the air pressure value inside the battery exceeds a safe value, the gas inside the battery will break through the diaphragm and release the air pressure inside the battery in time, thereby avoiding the battery explosion caused by excessive air pressure value inside the battery. Laser welding is performed between the valve body and the cap, so that additional materials such as fasteners and sealing rings are saved. The production cost to a certain extent may be reduced. The deformation phenomenon of explosion-proof valve assembly may be prevented. Laser welding also has lower demand for processing accuracy, which may improve the production efficiency of the battery pack casing and thus increase the development progress of products.

### BRIEF DESCRIPTION OF THE DRAWINGS

FIG. 1 is a schematic perspective view of a battery pack casing provided by some embodiments of the present disclosure.
FIG. 2 is a schematic top view of the battery pack casing provided by some embodiments of the present disclosure.
FIG. 3 is a schematic cross-sectional view at A-A in FIG. 2.
FIG. 4 is an enlarged schematic view at B in FIG. 3.
FIG. 5 is a schematic perspective view of a cap provided by some embodiments of the present disclosure.
FIG. 6 is a schematic perspective view of a valve body provided by some embodiments of the present disclosure.
FIG. 7 is a schematic perspective view of the valve body from another perspective provided by some embodiments of the present disclosure.

### Reference numerals:

10, cap; 11, outer surface; 12, inner surface; 13, pressure relief hole;
20, explosion-proof valve assembly; 21, valve body; 211, through hole; 212, first positioning groove; 213, second positioning groove; 214, connecting part; 215, mounting part; 22, diaphragm;
30, first protrusion;
40, second protrusion;

### DETAILED DESCRIPTION

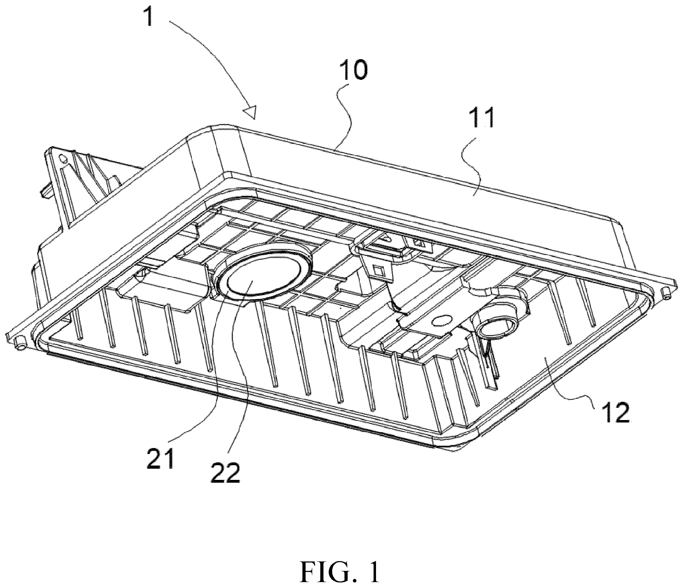

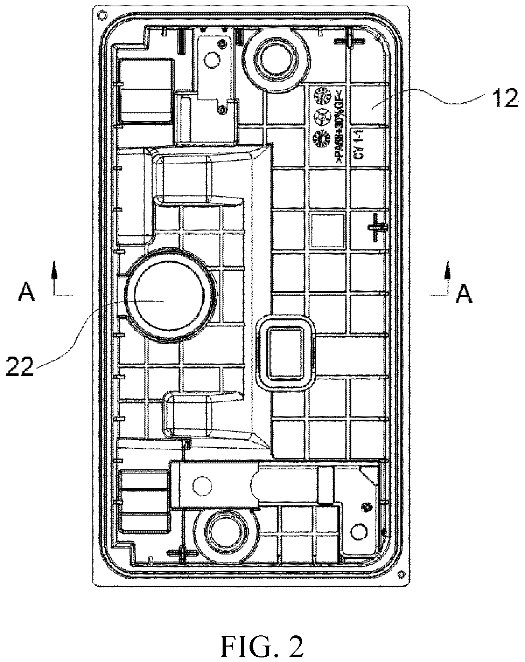

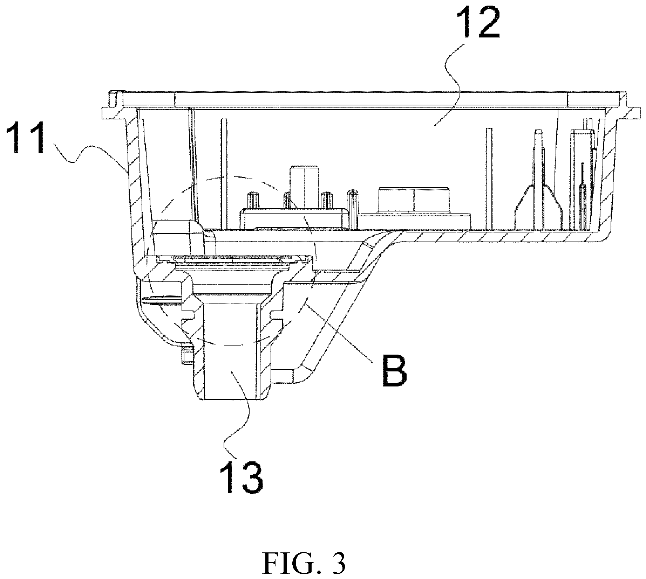

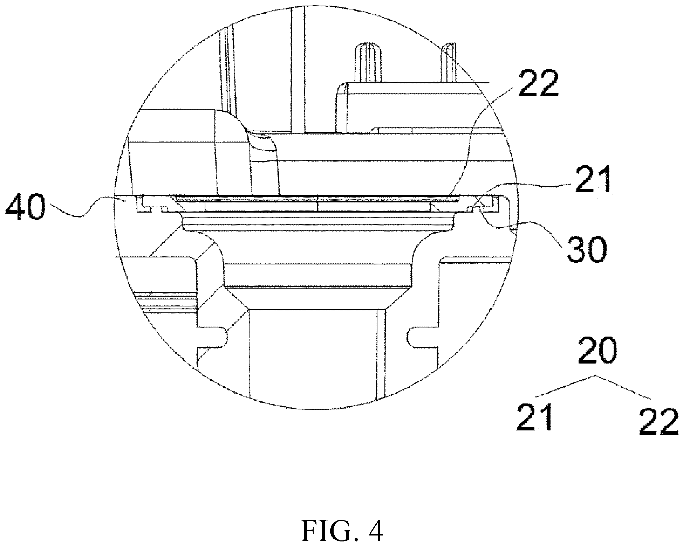

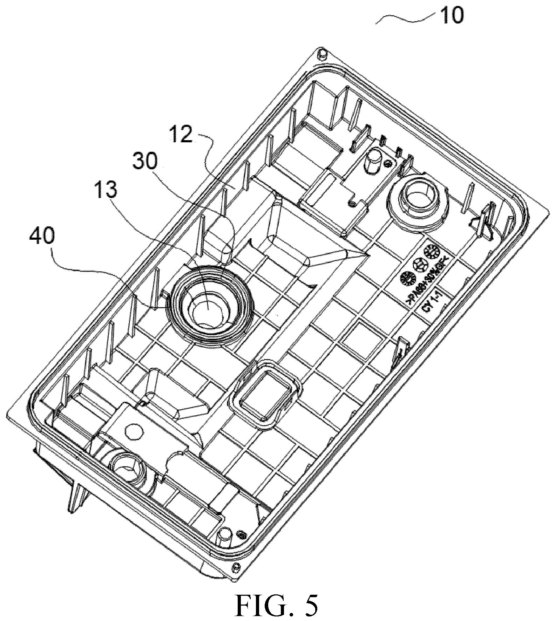

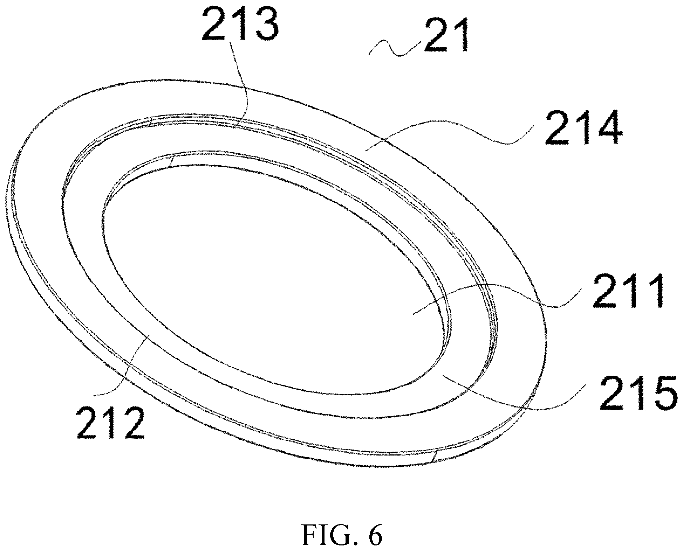

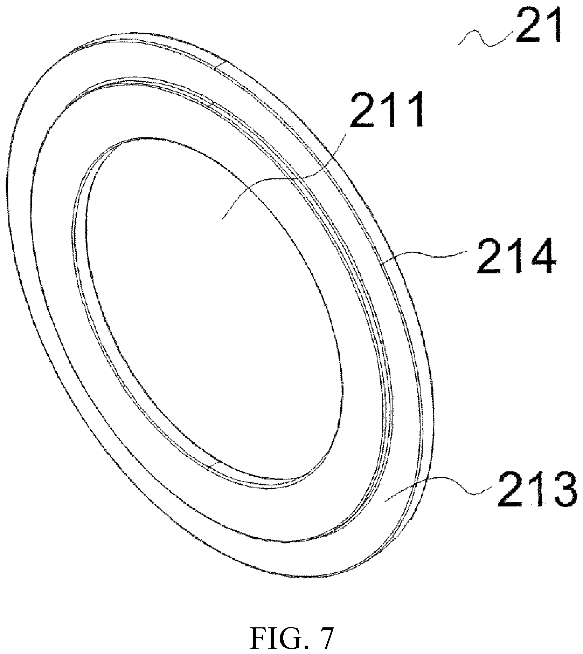

As shown in FIGs. 1 to 7, a battery pack casing is provided by the embodiments of the present disclosure. The battery pack casing includes a cap 10 provided with a pressure relief hole 13, and an explosion-proof valve assembly 20 disposed on the cap 10. The explosion-proof valve assembly 20 includes a valve body 21 and a diaphragm 22 connected to each other. The valve body 21 is connected to the cap 10. The diaphragm 22 plugs the pressure relief hole 13. The valve body 21 and the cap 10 are laser welded.

In the embodiments of the present disclosure, the cap 10 is provided with the pressure relief hole 13 penetrating the cap 10. The diaphragm 22 is provided correspondingly with the pressure relief hole 13, so that in condition that the air pressure value inside the battery exceeds the safe value, the gas inside the battery will break through the diaphragm 22 and release the air pressure inside the battery in time. The explosion of the battery due to excessive air pressure value inside the battery may be avoided. The laser welding is performed between the valve body 21 and the diaphragm 22, so that additional materials such as fasteners and sealing rings are saved. The production cost to a certain extent may be reduced. The deformation phenomenon of explosion-proof valve assembly may be prevented. Laser welding also has lower demand for processing accuracy, which may improve the production efficiency of the battery pack casing and thus increase the development progress of products.

In some embodiments, the cap 10 includes an outer surface 11 and an inner surface 12 disposed opposite to each other. The pressure relief hole 13 extends from the inner surface 12 to the outer surface 11 and penetrates the cap 10.

In some embodiments, due to the extremely high energy density of the laser beam in laser welding, it is possible to quickly heat and melt the material to be welded, thereby realizing high-speed and high-efficient welding. This high efficiency may not only improve production efficiency, but also reduce energy consumption. The heating area of laser welding is small, so the depth of fusion is small. A small depth of fusion means that the volume of material heated and melted during welding is relatively small, which helps to reduce the thermal stress and thermal deformation of the material in and around the welding area. Moreover, laser welding may accurately control the energy and focusing point of the laser beam, thereby achieving accurate control of the depth of fusion, making the welding process more controllable, and helping to improve the quality and consistency of the cap 10. Furthermore, the welding speed of laser welding is fast and the heat affected area is small, so that the deformation in the welding process may be reduced.

Further, the weld seam of laser welding has good shape, stable dimension, and few defects, such as relatively few welding defects such as pores and cracks, so that high-precision and high-quality welding between the cap 10 and the explosion-proof valve assembly 20 may be realized, which may help to improve the overall performance and service life of the battery pack casing. Laser welding may be provided to weld a variety of materials, including metals, plastics, ceramics, etc., as well as refractory materials with high melting point and high brittleness. The flexibility of the battery pack casing in material selection may be improved, thereby facilitating material selection according to different use environments to meet the use needs of users.

Specifically, laser welding does not need the welding head to be in contact with the piece to be welded, and does not need electrodes or filler materials, reducing contamination and loss. In addition, laser welding may be transmitted and transformed through optical components. It is easy to cooperate with automation equipment such as robots to achieve automation and multistation processing, which may make laser welding adaptable to various complex welding tasks. Laser welding does not produce harmful gas or noise, and is harmless to human body and environment. There is no mechanical contact in the laser welding process, which may reduce the potential safety hazards caused by mechanical contact. The laser beam may be focused to a high power density, and may achieve a high welding aspect ratio up to 10: 1. Laser welding has an advantage in situations where deep penetration welding is needed. Laser welding may accurately control the welding process and achieve precise welding. The laser has no inertia and starts and stops quickly, which may make laser welding have advantages in occasions where frequent starts and stops or precise control are needed. In addition, the laser welding process is easy to control, and different welding effects may be achieved by adjusting the laser parameters.

In some embodiments, the valve body 21 includes a connecting part 214 and a mounting part 215. The connecting part 214 is connected to the cap 10. The mounting part 215 is provided with a through hole 211 penetrating the mounting part 215. The through hole 211 is in communication with the pressure relief hole 13. The diaphragm 22 is connected to the mounting part 215 and plugs the through hole 211. In this way, in condition that the air pressure value inside the battery exceeds the safe value, the gas inside the battery may break through the diaphragm 22 and releases the air pressure inside the battery in time. The explosion of the battery caused by the excessive air pressure value inside the battery is avoided, thereby maintaining the safety of the battery in use.

In the present disclosure, the diaphragm 22 may be a breathable diaphragm. The breathable diaphragm is made of a waterproof and dustproof material, such as microporous polytetrafluoroethylene (PTFE). PTFE breathable diaphragm are used in the field of waterproof and breathable owing to its unique properties. The micropore aperture of the surface of the PTFE breathable diaphragm is designed to be larger than the gas molecules in the air, but smaller than the particle diameter of water, dust and other particles, so it may achieve good waterproof and breathable effects. According to different preparation processes, PTFE waterproof and breathable diaphragm may be divided into two types: stretched type (expended PTFE, ePTFE) and sintered type (sintered PTFE). The stretchable waterproof and breathable diaphragm is prepared from PTFE substrate through unidirectional or multi-directional stretching. The stretchable waterproof and breathable diaphragm has strong toughness and is not easy to break. It is suitable for scenarios where the temperature difference is relatively mild, the pressure difference needs to be balanced, and there is no risk of explosion. The sintered waterproof and breathable diaphragm is prepared from PTFE substrate through a sintering process. The sintered waterproof and breathable diaphragm is relatively brittle and easy to puncture. It is suitable for scenarios where there is a risk of severe temperature rise or explosion, and the diaphragm needs to self-explode to quickly relieve pressure. In the battery pack of new energy vehicles, the choice of explosion-proof valve breathable diaphragm is one of the factors to consider. The battery pack needs to maintain internal and external pressure balance during normal operation to reduce the occurrence of problems such as condensation. When abnormal conditions such as thermal runaway occur, the internal pressure needs to be quickly released to avoid catastrophic consequences. Therefore, for power batteries, it is more inclined to choose the sintered waterproof and breathable diaphragm. This breathable diaphragm may quickly self-explode to relieve pressure in condition that the internal pressure of the battery pack is too high, thus playing an explosion-proof role.

The breathable diaphragm made of polytetrafluoroethylene is light, thin, durable, waterproof, windproof, dustproof and breathable, that is, air molecules may pass through the breathable diaphragm, but water molecules may not breathable diaphragm. The electrolyte inside the battery module may be prevented from entering the pressure relief channel, avoiding the risk of leakage and further ensuring the safety and reliability of the battery module during use.

The diaphragm 22 may be made of other materials as long as it may meet the use requirements of the device.

Specifically, in the present disclosure, the thimble-free design is adopted in the pressure relief hole 13, so that under the condition of VDA NW 14, the cross-sectional area of the pressure relief hole 13 is increased, the pressure relief and exhaust are made more rapid. The thermal runaway of the battery module may be effectively prevented, and the thimble-free design makes the mold design simpler and the molding is easy. Further, the thimble-free design may avoid the air pressure change of the battery pack due to high altitude, high and low temperature impact, and the like, so that the deformation of the diaphragm material and the accidental touches the thimble which may cause the airtightness failure of the diaphragm 22 may be avoided.

Further, the pressure relief hole 13 with the thimble-free design may automatically break and release the pressure in condition that the internal pressure of the battery pack reaches the preset blasting point, without relying on mechanical components such as springs or thimbles. The accuracy and stability of the blasting point may be ensured. Since there is no need to rely on complex mechanical structures, the pressure relief hole 13 with the thimble-free design may be faster in response speed, which means that when the internal pressure of the battery pack rises abnormally, the explosion-proof valve may start and release the pressure more quickly, thereby more effectively protecting the safety of the device. The automatic blasting mechanism may quickly reduce the internal pressure, prevent battery pack damage or safety accidents caused by excessive pressure, protect the battery pack from damage, and ensure long-term stable operation of the battery pack. The pressure relief hole 13 with the thimble-free design has excellent air permeability and waterproof performance, and may effectively prevent external moisture and impurities from entering the inside of the battery pack while ensuring the gas circulation inside the battery pack. This helps to reduce the humidity and temperature inside the battery pack, and the operating efficiency and stability of the battery pack may be improved.

In some embodiments, the connecting part 214 includes a connecting surface. The mounting part 215 includes a mounting surface. The connecting surface and the mounting surface are located on both sides of the valve body 21, respectively. This arrangement may facilitate the the installation of diaphragm 22 and the valve body 21, and the installation of valve body 21 and the cap 10. The installation efficiency between components may be improved.

In some embodiments, the valve body 21 includes a first positioning groove 212. A groove bottom of the first positioning groove 212 has a mounting surface, and the diaphragm 22 is disposed in the first positioning groove 212. In this way, the diaphragm 22 may be mounted and positioned by the positioning groove 212. the mounting efficiency between the diaphragm 22 and the valve body 21 may be further improved, which is beneficial to improving the production efficiency.

In some embodiments, the diaphragm 22 is welded to the mounting part 215. In some embodiments, the diaphragm 22 and the mounting part 215 are ultrasonically welded. The ultrasonic welding converts a 50/60 Hz current into high-frequency electrical energy (such as 15, 20, 30 or 40 kHz) by an ultrasonic generator. The converted high-frequency electric energy is again converted into mechanical motion of the same frequency by the transducer, and then the mechanical motion is transmitted to the welding head by a set of horn devices that may change the amplitude. The welding head transfers the received vibration energy to the joint of the workpiece to be welded. In this region, the vibration energy is converted into thermal energy by friction, melting materials such as plastics. When the ultrasonic wave stops acting, a certain pressure is maintained to cool and solidify the welded part, so as to achieve the purpose of welding. Therefore, the ultrasonic welding speed is fast, the welding process may be completed in a short time, and the production efficiency of the battery pack casing may be improved. Ultrasonic welding has high welding strength and good sealing performance, so the ultrasonic welding may make the battery pack casing have good sealing performance to meet the needs of users.

Furthermore, the ultrasonic welding process does not need to add additional welding materials, does not produce harmful substances, and is environmentally friendly. The ultrasonic welding may be applied to welding a variety of materials, including thermoplastics, metals (such as thin parts such as gold, silver, copper, aluminum, etc.), fabrics and films, etc., thereby improving the application range of ultrasonic welding. Compared with traditional welding processes, ultrasonic welding may reduce production costs, which is conducive to the mass production of battery pack casings.

Specifically, the valve body 21 further includes a second positioning groove 213. A groove bottom of the second positioning groove 213 has a connecting surface. An inner surface 12 of the cap 10 is further provided with a first protrusion 30. The first protrusion 30 is annularly arranged along a circumferential direction of the pressure relief hole 13. The groove bottom of the second positioning groove 213 is connected to the first protrusion 30. In this way, it is convenient to weld the valve body 21 and the cap 10, thereby improving the welding efficiency between the two.

In some embodiments, the first protrusion 30 is a continuous structure and is an integrally molded structure with the cap 10. The integrally molded structure makes the overall structure of the battery pack casing more solid and firm by one-time molding. This structural avoids the possible seam problems caused by traditional mounting for multi-component, and the overall strength and stability of the battery pack casing may be improved. The integrated molding technology may achieve high-precision and high-quality battery pack casing production. Whether it is injection molding, die casting or other molding methods, integrated molding technology may ensure the dimensional accuracy and shape accuracy of the battery pack casing to meet the needs of precision manufacturing.

Further, the integrally molded structure reduces the number of parts and the assembly process, thereby reducing the production cost. In addition, by optimizing the design and production process, the integrally molding technology may further reduce material waste and energy consumption, and improve production efficiency. The integrally molding technology may complete the manufacturing process of the battery pack casing in a short time, improving production efficiency. The production efficiency plays a role in mass production, which may shorten the production cycle and meet the market demand for rapid delivery. The integrally molded structure may have good durability. Due to the solid structure and no joints, the battery pack casing is not easy to loosen, break and occur other problems during use, thereby prolonging the service life of the battery pack casing.

Optionally, in other embodiments of the present disclosure, the first protrusion 30 may be further provided as a discontinuous structure. The specific arrangement structure may be selected according to the usage environment of the battery pack casing, so that the applicability and application range of the battery pack casing may be improved.

In some embodiments, the inner surface 12 of the cap 10 is further provided with a second protrusion 40. The second protrusion 40 is annularly arranged along the circumferential direction of the first protrusion 30. There is a gap between the second protrusion 40 and the first protrusion 30. In this way, it is convenient for the clamp of the automated robot to extend into the gap to mount and weld the valve body 21 and the cap 10, thereby further improving the welding efficiency of the valve body 21 and the cap 10. In some embodiments, the second protrusion 40 has a continuous structure, and is an integrally molded structure with the cap 10. The integrally molded structure makes the overall structure of the battery pack casing more solid and firm by one-time molding.

Optionally, in other embodiments of the present disclosure, the second protrusion 40 may also be provided as a discontinuous structure, and the specific arrangement structure may be selected according to the usage environment of the battery pack casing, so that the applicability and application range of the battery pack casing may be improved.

In some embodiments, a protruding height of the first protrusion 30 protruding from the inner surface 12 is less than or equal to a protruding height of the second protrusion 40 protruding from the inner surface 12. In this way, it is convenient to limit the valve body 21 during mounting, so as to prevent the phenomenon of displacement of the valve body 21.

In some embodiments, a material of the mounting part 215 is same as a material of the cap 10. Since the same material is easier to blend together using laser welding, the welding efficiency of the mounting part 215 and the cap 10 may be further improved. The welding process of the two may be simpler, and the production efficiency of the battery pack casing may be improved as much as possible.

Specifically, the material of the mounting part 215 and/or the material of the cap 10 includes nylon. In some embodiments, the valve body 21 is made of light-transmitting material (such as black glass fiber reinforced nylon-66 (PA66+GF)) with 30% transmittance. The cap 10 is selected of light-absorbing PA66 with 30% glass fiber (PA66+30GF). The mechanical properties such as tensile strength, compression strength and bending strength of PA66+GF are higher than that of general plastic materials, and the tensile strength of PA66+GF may reach more than 100 MPa. PA66+GF has high stiffness, and the elastic modulus may reach more than 5000 MPa. PA66+GF has good bending resistance, compression resistance and torsion resistance, so as to ensure the structural strength of the valve body 21.

Furthermore, PA66+GF has good heat resistance and may work in a high-temperature environment. Thermal deformation temperature of PA66+GF may reach more than 200 °C. PA66+GF is not easy to deform, crack or embrittle, and has good durability. Therefore, the valve body 21 has an advantage in high temperature operating environments. Because PA66 itself has good chemical corrosion resistance, its corrosion resistance is further enhanced after adding glass fiber. PA66+GF is not easily corroded by chemicals and may resists corrosion from many chemicals, which may be applied to the valve body 21 that may need to be used in corrosion-resistant environments. Furthermore, PA66+GF has good injection moldability and extrusion processability, so that it is convenient to manufacture the valve body 21 of different shapes, and thus may meet the processing requirements in different environments.

In some embodiments, a shape of a cross section of the pressure relief hole 13 is circular. The circular structure may provide uniform force distribution, so that the pressure relief hole 13 is more stable and reliable when bearing the force, which helps to reduce the risk of deformation and damage of the pressure relief hole 13. The circular structure may provide a tighter interface fit and reduce the possibility of leakage, thereby helping to improve the sealing performance of the battery pack casing. Moreover, the circular structure may provide the smooth flow path, and the continuous and smooth shape helps to reduce the resistance of the fluid in the pressure relief hole 13 and the generation of vortex. The delivery efficiency of the fluid may be improved, and the pressure relief efficiency of the battery pack casing may be improved as much as possible.

In other embodiments of the present disclosure, the cross section of the pressure relief hole 13 may be disposed in a square shape, a trapezoid shape, or the like, as long as the pressure relief demand of the battery pack casing is met. The specific shape may be selected according to the use environment of the battery pack casing, and there is no specific limitation here.

In the embodiments of the present disclosure, the cap 10 is provided with the pressure relief hole 13 penetrating the cap 10. The diaphragm 22 is provided correspondingly with the pressure relief hole 13, so that in condition that the air pressure value inside the battery exceeds the safe value, the gas inside the battery will break through the diaphragm 22 and release the air pressure inside the battery in time. The explosion of the battery due to excessive air pressure value inside the battery may be avoided. The laser welding is performed between the valve body 21 and the diaphragm 22, so that additional materials such as fasteners and sealing rings are saved. The production cost to a certain extent may be reduced. The deformation phenomenon of explosion-proof valve assembly may be prevented. Laser welding also has lower demand for processing accuracy, which may improve the production efficiency of the battery pack casing and thus increase the development progress of products.

## Claims

1. A battery pack casing, **characterized by** comprising:
a cap (10) provided with a pressure relief hole (13);
an explosion-proof valve assembly (20) disposed on the cap (10), the explosion-proof valve assembly (20) comprising a valve body (21) and a diaphragm (22) connected to each other, the valve body (21) being connected to the cap (10), and the diaphragm (22) being configured to plug the pressure relief hole (13);
wherein the valve body (21) is laser welded to the cap (10).

2. The battery pack casing of claim 1, **characterized in that** the valve body (21) comprises a connecting part (214) and a mounting part (215), the connecting part (214) is connected to the cap (10), the mounting part (215) is provided with a through hole (211) penetrating the mounting part (215), and the through hole (211) is in communication with the pressure relief hole (13); and the diaphragm (22) is connected to the mounting part (215) and plugs the through hole (211).

3. The battery pack casing of claim 2, **characterized in that** the connecting part (214) comprises a connecting surface, the mounting part (215) comprises a mounting surface, and the connecting surface and the mounting surface are located on both sides of the valve body (21), respectively.

4. The battery pack casing of claim 3, **characterized in that** the valve body (21) comprises a first positioning groove (212), a groove bottom of the first positioning groove (212) comprises the mounting surface, and the diaphragm (22) is disposed in the first positioning groove (212).

5. The battery pack casing of claim 3, **characterized in that** the valve body (21) further comprises a second positioning groove (213), a groove bottom of the second positioning groove (213) comprises the connecting surface, the cap (10) is provided with a first protrusion (30), the first protrusion (30) is annularly arranged along a circumferential direction of the pressure relief hole (13), and the groove bottom of the second positioning groove (213) is connected to the first protrusion (30).

6. The battery pack casing of claim 5, **characterized in that** the cap (10) is further provided with a second protrusion (40), the second protrusion (40) is annularly arranged along a circumferential direction of the first protrusion (30), and a gap is provided between the second protrusion (40) and the first protrusion (30);
optionally, a protruding height of the first protrusion (30) is less than or equal to a protruding height of the second protrusion (40).

7. The battery pack casing of any one of claims 2 to 6, **characterized in that** the diaphragm (22) is welded to the mounting part (215);
optionally, the diaphragm (22) is ultrasonically welded to the mounting part (215).

8. The battery pack casing of any one of claims 2 to 6, **characterized in that** a material of the mounting part (215) is same as a material of the cap (10).

9. The battery pack casing of any one of claims 2 to 8, **characterized in that** the mounting part (215) and/or the cap (10) comprises a light transmitting material;
optionally, a transmittance of the light transmitting material is greater than or equal to 30%.

10. The battery pack casing of any one of claims 1 to 9, **characterized in that** the cap (10) comprises an outer surface and an inner surface opposite to each other, and the pressure relief hole (13) extends from the inner surface to the outer surface.

11. The battery pack casing of any one of claims 1 to 9, **characterized in that** the diaphragm (22) comprises a gas permeable diaphragm.

12. The battery pack casing of any one of claims 5 to 9, **characterized in that** the first protrusion (30) has a continuous structure and is integrally molded with the cap (10).

13. The battery pack casing of any one of claims 6 to 9, **characterized in that** the second protrusion (40) has a continuous structure and is integrally molded with the cap (10).

14. The battery pack casing of any one of claims 2 to 9, **characterized in that** a material of the mounting part (215) and/or a material of the cap (10) comprises nylon.

15. The battery pack casing of any one of claims 1 to 9, **characterized in that** a cross-sectional shape of the pressure relief hole (13) is circular.
